# EUROPÄISCHE PATENTSCHRIFT

(11) **EP 2 061 291 B1**
(45) Veröffentlichungstag und Bekanntmachung des Hinweises auf die Patenterteilung: **28.03.2012**
(21) Anmeldenummer: 08016157.3
(22) Anmeldetag: 12.09.2008
(51) Int. Cl.: A63C 5/00, F16B 37/12, H05K 5/00, F16B 5/01

(54) **Gleitbrett**
Aquaplane
Planche de glisse

(30) Priorität: 14.11.2007 DE 202007015913 U
(43) Veröffentlichungstag der Anmeldung: 20.05.2009
(73) Patentinhaber: Salewa Sportgeräte GmbH, 85609 Aschheim (DE)
(72) Erfinder: Gerstner, Reiner, 82237 Wörthsee (DE)
(74) Vertreter: Prechtel, Jörg

(56) Entgegenhaltungen:
- DE-A1- 19 748 464
- FR-A- 2 595 579
- US-A- 5 016 901

## Beschreibung

Die vorliegende Erfindung betrifft ein Gleitbrett sowie ein Gleitbrettzwischenprodukt und ein verfahren zu definieren, welche einen plattenförmigen Hauptkörper sowie eine Bindungsmontageanordnung umfassen.

Unter einem Gleitbrett im Sinne dieser Erfindung ist insbesondere ein Ski oder ein Snowboard zu verstehen, an dessen Bindungsmontageanordnung eine an sich bekannte Bindung zur Halterung eines Ski- oder Snowboardschuhs befestigt werden soll. Solche Bindungsmontageanordnungen werden üblicherweise bereits während der Massenfertigung des Gleitbretts hergestellt, um die spätere Befestigung einer Bindung beim Abnehmer, z.B. einem Händler, Skiverleiher oder einem Endverbraucher selbst, zu erleichtern.

Übliche Bindungsmontageanordnungen umfassen z.B. vorgebohrte Lochmuster im Hauptkörper des Gleitbretts, sodass der Abnehmer des Skis zur Bindungsmontage keine Bohrwerkzeuge mehr benötigt. Bekannt sind ferner Halteschienen, welche bereits werkseitig während der Verleimung des Gleitbretts in dem Hauptkörper befestigt werden, oder verschiedene sogenannte Inserts, welche in den Hauptkörper integriert werden. Solche Inserts werden z.B. zwischen zwei Platten des Hauptkörpers eingeschlossen und umfassen von der Gleitbrettoberseite her zugängliche Gewindestücke, in die bei der späteren Montage der Bindung durch den Abnehmer entsprechende Schrauben leicht eingeschraubt werden können.

Die bekannten Bindungsmontageanordnungen erfordern einen beträchtlich erhöhten Aufwand bei der Herstellung oder dem Transport/Lagerung der Gleitbretter bzw. Gleitbrettzwischenprodukte. So muss für eine sichere Befestigung der herkömmlichen Inserts ein mehrteiliger Aufbau des Hauptkörpers mit entsprechenden Aussparungen zur Aufnahme eines Halteflansches der Inserts zwischen zwei Teilen des Hauptkörpers bereitgestellt werden.

Werden statt der Inserts die erwähnten Bindungshalteschienen bei der Herstellung des Gleitbretts in dem Hauptkörper verankert, so kommt es aufgrund der nach außen vorstehenden Halteschienen zu erhöhten Lagerungs- und Transportkosten, da die Gleitbretter nicht mehr platzsparend flach aufeinander gelegt werden können und darüber hinaus sichergestellt werden muss, dass die Halteschienen benachbarte Gleitbretter nicht beschädigen.

Die DE 197 48 464 A1 offenbart ein Gleitbrett mit mehreren, in einem Gleitbrettkörper verankerten Gewindehülsen mit jeweils einem von der Oberseite des Gleitbrettkörpers her zugänglichen Innengewinde. Zum Einbringen der Gewindehülsen werden durch eine obere Deckschicht und eine Gurtung hindurch von oben her Kernbohrungen in ein in das Gleitbrett eingebettetes Insert eingebracht. Anschließend werden die Gewindehülsen in die Kernbohrungen eingesetzt.

Vor diesem Hintergrund ist es Aufgabe der vorliegenden Erfindung, ein Gleitbrett sowie ein Gleitbrettzwischenprodukt bereitzustelle und ein Verfahren zu definieren, welche die spätere Montage einer Bindung erleichtern, dabei jedoch möglichst wirtschaftlich hergestellt und transportiert bzw. gelagert werden können. Gemäß der vorliegenden Erfindung wird diese Aufgabe gelöst durch ein Gleitbrett umfassend einen plattenförmigen Hauptkörper, mindestens eine Bindungsmontageanordnung, welche in einem mittleren Abschnitt des Hauptkörpers angeordnet und zur Befestigung einer Bindung daran eingerichtet ist, sowie eine obere Deckschicht, welche oberhalb des Hauptkörpers angeordnet ist und nach außen frei liegt, wobei der Hauptkörper in dem mittleren Abschnitt mindestens eine Sackbohrung aufweist, welche sich zur Oberseite des Hauptkörpers hin öffnet, wobei die Bindungsmontageanordnung mindestens eine Schraubbuchse umfasst, welche in die mindestens eine Sackbohrung des Hauptkörpers eingesetzt ist, wobei zwischen der Schraubbuchse und den Wänden oder/und dem Boden der Sackbohrung ein harztragendes Fasermaterial angeordnet ist, und wobei die Deckschicht als geschlossene Schicht den Hauptkörper und die mindestens eine Bindungsmontageanordnung überdeckt und die obere Öffnung der mindestens einen Schraubbuchse verschließt.

Anzumerken ist, dass in der vorliegenden Beschreibung sowie den Ansprüchen Begriffe wie "oben", "unten", "Oberseite", "Unterseite", "oberhalb", "unterhalb", "seitlich", usw. sich auf eine normale Orientierung des Gleitbretts bzw. des Gleitbrettzwischenprodukts beziehen in welcher das im Wesentlichen plattenförmige Gleitbrett bzw. Gleitbrettzwischenprodukt parallel zu einer horizontalen Ebene ausgerichtet ist, die Bindungsmontageanordnung zu einer oberen Seite hin weist und eine Gleitfläche zur unteren Seite hinweist.

Erfindungsgemäß weist das Gleitbrett im mittleren Abschnitt des Hauptkörpers mindestens eine Sackbohrung auf, in die von oben eine entsprechend bemessene Schraubbuchse eingesetzt ist. Eine solche nach oben offene Sackbohrung lässt sich relativ einfach herstellen und schwächt den Hauptkörper nur im geringen Maße. Die Schraubbuchse ist mit den Wänden oder/und dem Boden der Sackbohrung durch ein dazwischen angeordnetes harztragendes Fasermaterial fest verbunden. Bei der Herstellung härtet das Harz des Fasermaterials aus und stellt somit auf einfache Weise eine feste Verbindung zwischen Buchse und Sackbohrung her, ohne dass zusätzliche formschlüssige Verbindungssysteme notwendig sind.

Ferner ist die obere Öffnung der mindestens einen Schraubbuchse erfindungsgemäß durch die Deckschicht überdeckt und verschlossen, so dass kein Wasser oder Verunreinigungen in die Schraubbuchse eindringen können. Dabei überdeckt die Deckschicht vorteilhaft nicht nur die Öffnung der Schraubbuchse sondern auch einen großen Bereich, vorzugsweise die gesamte Oberseite des Hauptkörpers und dient somit gleichzeitig als obere Abschlussschicht des Gleitbretts. Auf diese Weise können die Herstellungskosten weiter reduziert werden und Qualitätseinbußen während des Transports/der Lagerung durch eindringendes Wasser bzw. Verunreinigungen können vermieden werden.

Das harztragende Fasermaterial kann vorzugsweise durch eine sogenannte Prepreg-Schicht gebildet sein, d.h. durch eine mit Kunstharz getränkte Vliesmatte.

Die Schraubbuchsen sind vorteilhaft preiswert verfügbare Schraubdübel mit oder ohne Innengewinde, oder sind als Gewindebuchsen mit genormtem Innengewinde ausgebildet. Wenn die Schraubbuchsen im Wesentlichen nicht über die Oberfläche des Gleitbretts vorstehen, so können erfindungsgemäße Gleitbretter ohne Gefahr einer gegenseitigen Beschädigung flach übereinander gestapelt werden, so dass Transport- und Lagerkosten reduziert werden.

In einer bevorzugten Ausführungsform des Gleitbretts umfasst die Bindungsmontageanordnung ferner eine Bindungsplatte, welche auf dem Hauptkörper befestigt ist, wobei zwischen Hauptkörper und Bindungsplatte ein oder das harztragende Fasermaterial angeordnet ist und wobei die Bindungsplatte mindestens ein Loch aufweist, durch welches das Innere der Schraubbuchse zugänglich ist. Eine Bindungsplatte gemäß dieser Ausführungsform kann aus Metall oder Kunststoff hergestellt sein und dient dem Schutz des Hauptkörpers im Bereich der Bindung gegenüber mechanischen Belastungen, die von der Bindung her auf das Gleitbrett wirken. Vorteilhaft weist dabei eine Bindungsplatte eine Mehrzahl von Löchern auf und ist somit einer Anordnung mehrerer Schraubbuchsen der Bindungsmontageanordnung zugeordnet.

Wenn die Oberseite der mindestens einen in die Sackbohrung eingeschobenen Schraubbuchse soweit über die Oberfläche des Hauptkörpers vorsteht, dass die Oberseite der Schraubbuchse im Wesentlichen bündig mit der Oberfläche der Bindungsplatte abschließt, so kann einerseits eine im Wesentlichen ebene Gleitbrettoberseite geschaffen werden, welche die oben erwähnten Vorteile im Hinblick auf die Transport-und Lagerkosten aufweist, und andererseits kann eine schnelle und dennoch genaue Positionierung der Bindungsplatte bezüglich der Schraubbuchsen ermöglicht werden, da der obere Abschnitt der Schraubbuchse in Stück weit in das Loch der Bindungsplatte einrastet und dabei eine Positionierung der Bindungsplatte arretiert.

In einer weiteren vorteilhaften Ausführungsform ist die Bindungsplatte mit der mindestens einen Schraubbuchse fest verbunden. Auch in diesem Fall wird eine Positionierung der Bindungsplatte relativ zu der Schraubbuchse erleichtert. In einer besonders einfachen und kostengünstigen Variante sind eine Bindungsplatte und mindestens eine Schraubbuchse zu einem einstückigen Formkörper vereinigt und z.B. als Spritzgussformteil einstückig hergestellt.

Nach einem zweiten Aspekt der vorliegenden Erfindung wird die oben genannte Aufgabe gelöst durch ein Gleitbrettzwischenprodukt umfassend einen plattenförmigen Hauptkörper, welcher in einem mittleren Abschnitt mindestens eine Sackbohrung aufweist, die sich zur Oberseite des Hauptkörpers hin öffnet, mindestens eine harzgetränkte Faserlage, welche auf dem Hauptkörper angeordnet ist und die mindestens eine Sackbohrung überdeckt, so dass die harzgetränkte Faserlage sowohl in der Umgebung der Sackbohrung auf der Oberseite des Hauptkörpers aufliegt, als auch über die Sackbohrung hinweg verläuft, und mindestens eine Bindungsmontageanordnung welche mindestens eine Schraubbuchse umfasst, die so gestaltet ist, dass sie in die mindestens eine Sackbohrung des Hauptkörpers passt.

Ein derartiges Gleitbrettzwischenprodukt lässt sich kostengünstig herstellen, da im Vergleich zu einem entsprechenden Gleitbrettzwischenprodukt des Standes der Technik, bei welchem keine Bindungsmontageanordnung vorgesehen ist, der plattenförmige Hauptkörper der Erfindung lediglich die mindestens eine Sackbohrung und die harzgetränkte Faserlage aufweisen muss. Die harzgetränkte Faserlage lässt sich auf einfache Weise auf der Oberseite des Hauptkörpers aufbringen, so dass sie die mindestens eine Sackbohrung überdeckt. Bei entsprechend großzügiger Bemessung der harzgetränkten Faserlage lässt sich eine solche Anordnung schnell und kostengünstig bereitstellen, insbesondere dann, wenn eine Faserlage mehrere Sackbohrungen überdeckt.

Das erfindungsgemäße Gleitbrettzwischenprodukt ist vorzugsweise ein Zwischenprodukt für die Herstellung des oben beschriebenen erfindungsgemäßen Gleitbretts. Für eine solche Herstellung stellt die Erfindung ferner ein einfaches und wirtschaftliches Verfahren bereit, welches zumindest die folgenden Schritte umfasst: Herstellen eines plattenförmigen Hauptkörpers, Ausbilden wenigstens einer Sackbohrung in einem mittleren Abschnitt des Hauptkörpers, welche sich zur Oberseite des Hauptkörpers hin öffnet, Aufbringen mindestens einer harzgetränkten Faserlage auf der Oberseite des Hauptkörpers, so dass die harzgetränkte Faserlage die mindestens eine Sackbohrung überdeckt, Eindrücken einer Schraubbuchse in die harzgetränkte Faserlage oberhalb der Sackbohrung, so dass die Schraubbuchse in die Sackbohrung eindringt, wobei ein Abschnitt der harzgetränkten Faserlage in einen Bereich zwischen der Schraubbuchse und den Wänden oder/und dem Boden der Sackbohrung gedrückt wird, sowie Aushärten des Harzes der harzgetränkten Faserlage. Durch ein solches Verfahren kann die mindestens eine Schraubbuchse während der Herstellung oder Massenfertigung des Gleitbretts in einfacher und effektiver Weise fest in dem Hauptkörper verankert werden.

Insbesondere wird daran gedacht, das Einschieben der Schraubbuchse gleichzeitig mit dem Verpressen oder Verleimen des Gleitbretts vorzunehmen, so dass die Herstellungszeit des Gleitbretts verkürzt werden kann. Eine weitere Steigerung der Effektivität kann erreicht werden, wenn eine Mehrzahl von Schraubbuchsen gleichzeitig durch die harzgetränkte Faserlage, insbesondere durch ein und dieselbe, sich über mehrere Sackbohrungen hinweg erstreckende Faserlage hindurch in die Mehrzahl von Sackbohrungen eingeschoben werden.

Ferner wird vorzugsweise nach dem Einschieben der mindestens einen Schraubbuchse eine obere Deckschicht auf der Oberseite des Hauptkörpers aufgetragen, welche zumindest die obere Öffnung der mindestens einen Schraubbuchse überdeckt und somit gegen den Eintritt von Wasser oder Verunreinigungen sicher verschließt. Die obere Deckschicht kann sich vorzugsweise über die im Wesentlichen gesamte Oberfläche des Hauptkörpers erstrecken und somit gleichzeitig eine äußere Abdeckschicht des

Gleitbretts bilden.

Die harzgetränkte Faserlage kann oberhalb der mindestens einen Sackbohrung einen Einschnitt oder eine Materialschwächung aufweisen, so dass ein definiertes Verdrängen der harzgetränkten Faserlage in die Sackbohrung hinein durch die Wirkung der eindringenden Schraubbuchse erleichtert wird. Ein solcher Einschnitt kann etwa kreuzförmig gestaltet sein, so dass sich die dabei entstehenden vier Ohren der Faserlage leicht in das Innere der Sackbohrung abknicken lassen.

Wenn sich ferner die harzgetränkte Faserlage über mindestens zwei Sackbohrungen und über einen zwischen den mindestens zwei Sackbohrungen verlaufenden Oberflächenbereich des Hauptkörpers hinweg erstreckt, so können nicht nur die mindestens zwei Sackbohrungen mit nur einer aufgetragenen Faserlage ausgestattet werden, sondern es wird gleichzeitig eine einfache und dabei feste Verbindung zur Befestigung einer Bindungsplatte vorbereitet. Vorzugsweise gleichzeitig mit dem Schritt des Eindrückens der mindestens einen Schraubbuchse in die zugeordnete Sackbohrung kann dann nämlich in dem oben erwähnten Herstellungsverfahren eine Bindungsplatte an die Oberseite des Hauptkörpers angedrückt werden, so dass sich die harzgetränkte Faserlage zwischen der Bindungsplatte und dem Hauptkörper befindet. Unter Aufrechterhaltung eines Drucks wird dann das Harz der Faserlage auch in dem Bereich unterhalb der Bindungsplatte aushärten gelassen, so dass die mindestens eine Schraubbuchse sowie auch die Bindungsplatte gleichzeitig fest mit dem Hauptkörper verbunden werden. Dies ist dann insbesondere unter Verwendung nur einer einzigen harzgetränkten Faserlage möglich, welche gleichzeitig Bindungsplatte sowie Schraubbuchse mit dem nötigen Harz versorgt.

Die vorliegende Erfindung wird nachfolgend anhand eines bevorzugten Ausführungsbeispiels unter Bezugnahme auf die beigefügten Zeichnungen näher erläutert. Es zeigen:
- Figur 1: eine Draufsicht eines Skis nach einem Ausführungsbeispiel der Erfindung,
- Figur 2: ein Zwischenprodukt zur Herstellung des in Figur 1 gezeigten Skis in einer Schnittansicht entsprechend einer Linie II-II in Figur 1,
- Figur 3: eine Draufsicht auf einen Abschnitt des Zwischenprodukts der Figur 2 im Bereich einer erfindungsgemäßen Bohrung und
- Figur 4: eine Schnittansicht des in Figur 1 gezeigten Skis entsprechend einer Linie II-II in Figur 1.

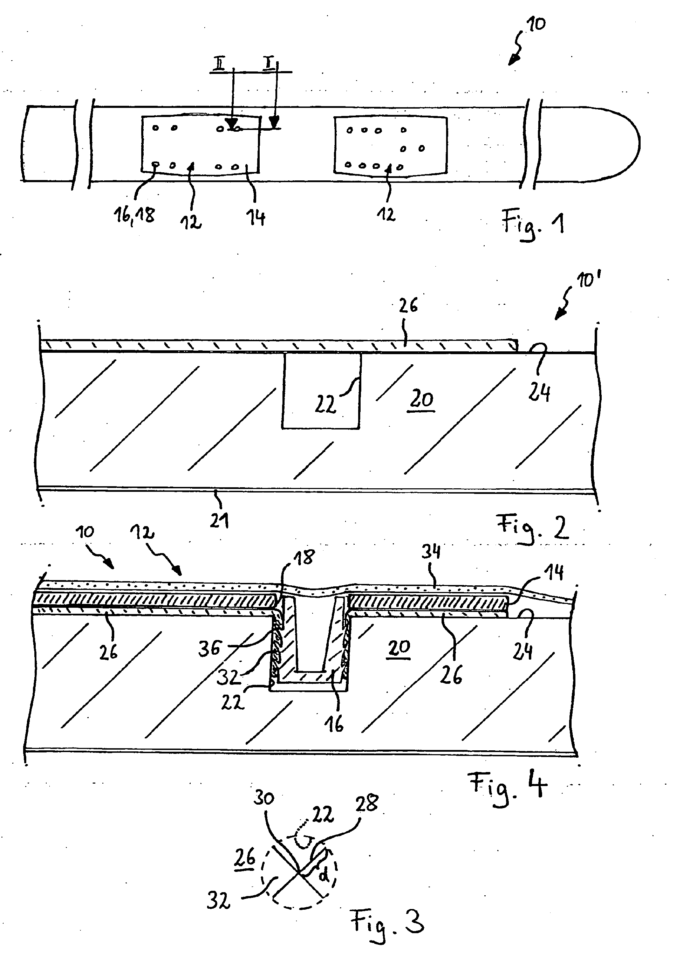

In Figur 1 ist ein Ski gemäß dem Ausführungsbeispiel der Erfindung allgemein mit 10 bezeichnet. In an sich bekannter Weise weist dieser eine längliche Form auf, wobei in seinem in Längsrichtung mittleren Abschnitt, in welchem später eine nicht dargestellte Bindung des Skis zu befestigen ist, zwei Bindungsmontageanordnungen 12, 12 befestigt sind. Jede der Bindungsmontageanordnungen 12, 12 umfasst eine Bindungsplatte 14 sowie eine Mehrzahl von Schraubbuchsen 16, welche unterhalb der Bindungsplatte 14, angeordnet sind. Das Innere der Schraubbuchse 16 ist durch entsprechend angeordnete Löcher 18 der Bindungsplatte 14 hindurch von außen zugänglich.

Die Bindungsplatten 14, 14 weisen eine bestimmte Anzahl sowie Anordnung der Löcher 18 auf, welche einer bestimmten Anzahl sowie Anordnung von Schraubbuchsen 16 entsprechen und an eine oder mehrere standardisierte Bindungstypen angepasst sind. Die entsprechende passende Bindung kann somit durch geeinigte Schrauben mit den zugeordneten Schraubbuchsen 16 verschraubt werden. Anzahl und Anordnung der Schraubbuchsen 16 und dementsprechend auch der Löcher 18 der Bindungsplatte 14 können demnach entsprechend dem einzusetzenden Bindungstyp oder der einzusetzenden Bindungstypen gewählt werden. Insbesondere können sich auch die beiden in Figur 1 erkennbaren Bindungsmontageanordnungen voneinander im Hinblick auf Anzahl und Anordnung der Schraubbuchsen 16 bzw. Löcher 18 voneinander unterscheiden.

Da die Gestaltung und Montage der Schraubbuchsen 16 beider Bindungsmontageanordnungen 12, 12 im Übrigen einander gleichen bzw. einander entsprechen, wird im folgenden nur eine der Schraubbuchsen 16 näher erläutert, wobei die getroffenen Aussagen in entsprechender Weise auch für die übrigen Schraubbuchsen 16 gelten.

Figur 2 zeigt in vergrößerter Darstellung einen Ausschnitt eines erfindungsgemäßen Zwischenprodukts 10' zur Herstellung des in Figur 1 gezeigten Skis in einem Querschnitt entsprechend Linie II-II der Figur 1. Zu beachten ist, dass Figur 2 keine Schraubbuchse, Bindungsplatte oder Deckschicht zeigt; diese Elemente können zwar Teil des erfindungsgemäßen Zwischenprodukts sein, werden aber in dem dem Zwischenprodukt 10' entsprechenden Herstellungsstadium noch getrennt vorgehalten.

In Figur 2 ist zu erkennen, dass das Zwischenprodukt 10' einen Holzkern 20 sowie eine an der Unterseite des Holzkerns 20 angebrachte Lauffläche 21 aufweist. Der Holzkern 20 erstreckt sich über die gesamte Länge und Breite des Skis 10 und stellt das formgebende Hauptelement des Skis dar. Der Holzkern 20 kann aus mehreren Teilen, beispielsweise mehreren Schichten gebildet sein.

In den Holzkern 20 wird von einer Oberseite 24 des Holzkerns 20 her eine Sackbohrung 22 eingebracht. Die Sackbohrung 22 erstreckt sich von der Oberseite 24 aus ein Stück weit in den Holzkern 20 hinein und endet dort, um einen Boden der Sackbohrung zu bilden.

Anschließend wird auf die Oberseite 24 des Holzkerns 20 eine harzgetränkte Vliesmatte 26 (Prepreg-Lage) aufgelegt, so dass diese sowohl in der Umgebung der Sackbohrung 22 auf der Oberseite 24 des Holzkerns 20 aufliegt, als auch über die Sackbohrung 22 hinweg verläuft.

In dem oberhalb der Sackbohrung 22 angeordneten Abschnitt der Vliesmatte 26 ist die Vliesmatte 26 mit einem kreuzförmigen Einschnitt 28 versehen (vergleiche Figur 3), wobei ein Mittelpunkt 30 des kreuzförmigen Einschnitts 28 in etwa dem Zentrum der Bohrung 22 entspricht und die Länge d jedes der vier Schnitte des Einschnitts 28 in etwa dem Radius der Sackbohrung 22 entspricht. Der Einschnitt 28 kann in dem Herstellungsverfahren vor oder nach dem Aufbringen der Vliesmatte 26 auf dem Holzkern 20 hergestellt werden.

Vom Hauptkörper 20 und Vliesmatte 26 in diesem Herstellungsstadium noch getrennt werden ferner Schraubbuchsen 16 vorgehalten, welche so bemessen sind, dass sie in die jeweilige Sackbohrung 22 passen. Die Schraubbuchsen 16 können je nach zu verwendendem Schraubmittel verschiedene Ausgestaltungen aufweisen. So können Schraubbuchsen 16 zum Einsatz kommen, deren Inneres sich von der offenen Oberseite aus zur geschlossenen Unterseite hin allmählich verjüngt, so dass das Innere der Schraubbuchse 16 im Querschnitt entsprechend Figur 4 eine konische Form aufweist. Eine solche Schraubbuchse 16 kann insbesondere in Zusammenwirkung mit entsprechend spitz zulaufenden Schrauben (Holzschrauben, Blechschrauben etc.) mit grober Gewindeteilung verwendet werden. Solche Schraubbuchsen 16 sind beispielsweise im Stand der Technik als Dübel bekannt und weisen zumeist keinen ausgeprägten Gewindegang auf. Stattdessen schneidet sich das Gewinde der Schraube in das Material des Dübels (vorzugsweise Kunststoff) ein.

Alternativ kann die Schraubbuchse in ihrem Inneren eine zylindrische Form aufweisen und an ihrer Innenwand mit einem vorgefertigten Gewinde versehen sein. Die Schraubbuchse ist dann vorzugsweise aus Metall hergestellt und für ein Zusammenwirken mit einer passenden zylinderförmigen Metallschraube eingerichtet.

Unter Verwendung des so hergestellten Zwischenprodukts 10' wird zur Herstellung des in Figur 4 gezeigten Skis 10 in einem nachfolgenden Herstellungsschritt die Schraubbuchse 16 durch die Vliesmatte 26 hindurch in die Sackbohrung 22 hinein gedrückt. Dabei klappen die durch den Einschnitt 28 gebildeten vier Ohren 32 der Vliesmatte 26 (vergleiche Figuren 3 und 4) in das Innere der Sackbohrung 22 und werden zwischen der eindringenden Schraubbuchse 16 und den Seitenwänden bzw. dem Boden der Sackbohrung 22 eingequetscht. Harzmaterial wird aus der Vliesmatte heraus gedrückt und verteilt sich in dem Bereich zwischen Schraubbuchse 16 und Sackbohrung 22.

Um den Halt der Schraubbuchse 16 in der Sackbohrung 22 weiter zu verbessern, weist die Schraubbuchse 16 an ihrem Außenumfang ferner Widerhaken 36 auf, wie in Figur 4 gut zu erkennen ist. In dem gezeigten Ausführungsbeispiel laufen die Widerhaken 36 als ringförmige Rippen um den Außenumfang der Schraubbuchse 16. Die Widerhaken graben sich ein Stück weit in die Wandung der Sackbohrung 22 und stellen darüber hinaus eine vergrößerte Angriffsfläche für das Harzmaterial bereit.

In einem weiteren Verfahrensschritt, vorzugsweise gleichzeitig mit dem Eindrücken der Schraubbuchse 16, wird die Bindungsplatte 14 auf die Vliesmatte 26 aufgepresst, wobei die Bindungsplatte 14 dabei so positioniert wird, dass das Loch 18 mit der Öffnung der Schraubbuchse 16 fluchtet. Durch die Druckkraft verteilt sich das Harz der Vliesmatte 26 in dem Bereich zwischen Bindungsplatte 14 und Oberseite 24 des Holzkerns 20.

Unter Aufrechterhaltung der Druckkraft auf Schraubbuchse 16 oder/und Bindungsplatte 14 wird das Harz der Vliesmatte 26 aushärten gelassen, bis eine ausreichend feste Verbindung zwischen Schraubbuchse 16 und Sackbohrung 22 bzw. zwischen Bindungsplatte 14 und Holzkern 20 hergestellt ist.

Anschließend wird an der Oberseite des Skis 10 eine Deckschicht 34 aufgetragen, welche sich über die gesamte Oberseite des Skis 10 erstreckt und dabei auch über beide Bindungsmontageanordnung 12, 12 hinweg verläuft. Im Bereich jeder Schraubbuchse 16 überdeckt die Deckschicht 34 die Öffnung der Schraubbuchse 16 und verschließt diese somit.

Der auf diese Weise hergestellte Ski 10 (d.h. ein entsprechenden hergestelltes Paar Skier 10), kann anschließend zu einem Abnehmer, d.h. einem Händler, Verleiher, oder dergleichen, transportiert werden. Der Abnehmer kann dann eine geeinigte Bindung in einfacher Weise und ohne größeren Werkzeugaufwand an der Bindungsmontageanordnung befestigen, in dem er geeignete Schraubmittel in die passenden Schraubbuchsen einschraubt. Beim Einschrauben eines Schraubmittel kann die obere Deckschicht über den Schraubbuchsen leicht von dem Schraubmittel selbst durchdrungen werden, so dass ein vorheriges Vorbohren nicht erforderlich ist.

Die Positionen der Schraubbuchsen lassen sich für den Abnehmer leicht erkennen, wenn die obere Deckschicht aus transparentem Material gebildet ist. Andererseits bilden sich bei der Herstellung der oberen Deckschicht oberhalb der Schraubbuchsen Einfallstellen aufgrund des darunter liegenden Hohlraums. Solche Einfallstellen sind von außen gut zu erkennen, so dass die Position der Schraubbuchsen auch bei Verwendung einer nicht transparenten Deckschicht gut erkennbar sind.

## Patentansprüche

1. Gleitbrett (10) umfassend einen plattenförmigen Hauptkörper (20), mindestens eine Bindungsmontageanordnung (12), welche in einem mittleren Abschnitt des Hauptkörpers (20) angeordnet und zur Befestigung einer Bindung eingerichtet ist, sowie eine obere Deckschicht (34), welche oberhalb des Hauptkörpers (20) angeordnet ist und nach außen frei liegt,
wobei der Hauptkörper (20) in dem mittleren Abschnitt mindestens eine Sackbohrung (22) aufweist, welche sich zur Oberseite des Hauptkörpers (20) hin öffnet,
wobei die Bindungsmontageanordnung (12) mindestens eine Schraubbuchse (16) umfasst, welche in die mindestens eine Sackbohrung (22) des Hauptkörpers (20) eingesetzt ist,
wobei zwischen der Schraubbuchse (16) und den Wänden oder/und dem Boden der Sackbohrung (22) ein harztragendes Fasermaterial (26) angeordnet ist, und
wobei die Deckschicht (34) als geschlossene Schicht den Hauptkörper (20) und die mindestens eine Bindungsmontageanordnung (12) überdeckt und die obere Öffnung der mindestens einen Schraubbuchse (16) verschließt.

2. Gleitbrett (10) nach Anspruch 1, **dadurch gekennzeichnet, dass** die Bindungsmontageanordnung (12) ferner eine Bindungsplatte (14) umfasst, welche auf dem Hauptkörper (20) befestigt ist, wobei zwischen Hauptkörper (20) und Bindungsplatte (14) ein oder das harztragende Fasermaterial (26) angeordnet ist und wobei die Bindungsplatte (14) mindestens ein Loch (18) aufweist, durch welches das Innere der Schraubbuchse (16) zugänglich ist.

3. Gleitbrettzwischenprodukt (10') umfassend
- einen plattenförmigen Hauptkörper (20), welcher in einem mittleren Abschnitt mindestens eine Sackbohrung (22) aufweist, die sich zur Oberseite des Hauptkörpers (20) hin öffnet,
- mindestens eine harzgetränkte Faserlage (26), welche auf dem Hauptkörper (20) angeordnet ist und die mindestens eine Sackbohrung (22) überdeckt, so dass die harzgetränkte Faserlage (26) sowohl in der Umgebung der Sackbohrung (22) auf der Oberseite des Hauptkörpers (20) aufliegt, als auch über die Sackbohrung (22) hinweg verläuft, und
- mindestens eine Bindungsmontageanordnung (12) welche mindestens eine Schraubbuchse (16) umfasst, die so gestaltet ist, dass sie in die mindestens eine Sackbohrung (22) des Hauptkörpers (20) passt.

4. Gleitbrettzwischenprodukt (10') nach Anspruch 3, **dadurch gekennzeichnet, dass** die harzgetränkte Faserlage (26) oberhalb der Öffnung der mindestens einen Sackbohrung (22) einen Einschnitt (28) oder eine Materialschwächung aufweist.

5. Gleitbrettzwischenprodukt (10') nach Anspruch 3 oder Anspruch 4, **dadurch gekennzeichnet, dass** die harzgetränkte Faserlage (26) sich über mindestens zwei Sackbohrungen (22) und über einen zwischen den mindestens zwei Sackbohrungen verlaufenden Oberflächenbereich (24) des Hauptkörpers (20) hinweg erstreckt.

6. Verfahren zur Herstellung eines Gleittbretts (10), insbesondere eines Gleitbretts (10) nach Anspruch 1 oder Anspruch 2, wobei das Verfahren die folgenden Schritte umfasst:
- Herstellen eines plattenförmigen Hauptkörpers (20),
- Ausbilden wenigstens einer Sackbohrung (22) in einem mittleren Abschnitt des Hauptkörpers (20), welche sich zur Oberseite des Hauptkörpers hin öffnet,
- Aufbringen mindestens einer harzgetränkten Faserlage auf der Oberseite des Hauptkörpers (20), so dass die harzgetränkte Faserlage die mindestens eine Sackbohrung (22) überdeckt,
- Einschieben einer Schraubbuchse (16) in die harzgetränkte Faserlage oberhalb der Sackbohrung (22), so dass die Schraubbuchse (16) in die Sackbohrung (22) eindringt, wobei ein Abschnitt der harzgetränkten Faserlage in einen Bereich zwischen der Schraubbuchse (16) und den Wänden oder/und dem Boden der Sackbohrung (22) gedrückt wird, sowie
- Aushärten des Harzes der harzgetränkten Faserlage.

7. Verfahren nach Anspruch 6, **dadurch gekennzeichnet, dass** der Schritt des Einschiebens der Schraubbuchse (16) gleichzeitig mit einem Schritt des Verpressens oder Verleimens des Gleitbretts (10) ausgeführt wird.

8. Verfahren nach Anspruch 6 oder Anspruch 7, **dadurch gekennzeichnet, dass** eine Mehrzahl von Schraubbuchsen (16) gleichzeitig durch die harzgetränkte Faserlage, insbesondere durch ein und dieselbe, sich über mehrere Sackbohrungen (16) hinweg erstreckende Faserlage, hindurch in die Mehrzahl von Sackbohrungen (22) eingeschoben werden.

9. Verfahren nach einem der Ansprüche 6 bis 8, **dadurch gekennzeichnet, dass** nach dem Einschieben der mindestens einen Schraubbuchse (16) eine obere Deckschicht (34) auf der Oberseite des Hauptkörpers (20) aufgetragen wird, welche zumindest die obere Öffnung der mindestens einen Schraubbuchse (16) überdeckt.

10. Verfahren nach Anspruch 9, **dadurch gekennzeichnet, dass** die obere Deckschicht (34) sich über die im Wesentlichen gesamte Oberfläche des Hauptkörpers (20) erstreckt.

11. Verfahren nach einem der Ansprüche 6 bis 10, **dadurch gekennzeichnet, dass** es ferner einen Schritt des Andrückens einer Bindungsplatte (14) an die Oberseite des Hauptkörpers (20) umfasst, wobei eine oder die harzgetränkte Faserlage zwischen der Bindungsplatte (14) und dem Hauptkörper (20) angeordnet ist.

12. Verfahren nach Anspruch 11, **dadurch gekennzeichnet, dass** der Schritt des Andrückens der Bindungsplatte (14) gleichzeitig mit dem Schritt des Eindrückens der mindestens einen Schraubbuchse (16) in die zugeordnete Sackbohrung (22) ausgeführt wird.

## Claims

1. Aquaplane (10) comprising a plate-like main body (20), at least one binding mounting arrangement (12) which is arranged in a central portion of the main body (20) and is configured for fastening a binding, and an upper cover layer (34) which is arranged above the main body (20) and is open to the outside, the main body (20) having in the central portion at least one blind hole (22) which opens towards the top of the main body (20), the binding mounting arrangement (12) comprising at least one screw bushing (16) which is inserted into the at least one blind hole (22) of the main body (20), a resin-carrying fibre material (26) being arranged between the screw bushing (16) and the walls and/or base of the blind hole (22), and the cover layer (34) covering the main body (20) and the at least one binding mounting arrangement (12) as a closed layer and closing the upper opening of the at least one screw bushing (16).

2. Aquaplane (10) according to claim 1, **characterised in that** the binding mounting arrangement (12) further comprises a binding plate (14) which is fastened to the main body (20), a or the resin-carrying fibre material (26) being arranged between the main body (20) and the binding plate (14), and the binding plate (14) having at least one hole (18), through which the interior of the screw bushing (16) is accessible.

3. Aquaplane intermediate product (10') comprising
- a plate-like main body (20) which, in a central portion, has at least one blind hole (22) which opens towards the top of the main body (20),
- at least one resin-impregnated fibre layer (26) which is arranged on the main body (20) and covers the at least one blind hole (22) so that the resin-impregnated fibre layer (26) is both on the top of the main body (20) in the region of the blind hole (22) and extends over the blind hole (22), and
- at least one binding mounting arrangement (12) which comprises at least one screw bushing (16) which is constructed such that it fits into the at least one blind hole (22) of the main body (20).

4. Aquaplane intermediate product (10') according to claim 3, **characterised in that** the resin-impregnated fibre layer (26) has an indentation (28) or a point of material weakness above the opening of the at least one blind hole (22).

5. Aquaplane intermediate product (10') according to either claim 3 or claim 4, **characterised in that** the resin-impregnated fibre layer (26) extends over at least two blind holes (22) and over a surface region (24) of the main body (20) extending between the at least two blind holes.

6. Method for producing an aquaplane (10), in particular an aquaplane (10) according to either claim 1 or claim 2, the method comprising the following steps:
- producing a plate-like main body (20),
- forming at least one blind hole (22) in a central portion of the main body (20) which opens towards the top of the main body (20),
- attaching at least one resin-impregnated fibre layer to the top of the main body (20) so that the resin-impregnated fibre layer covers the at least one blind hole (22),
- inserting a screw bushing (16) into the resin-impregnated fibre layer above the blind hole (22) so that the screw bushing (16) penetrates the blind hole (22), a portion of the resin-impregnated fibre layer being compressed into a region between the screw bushing (16) and the walls and/or base of the blind hole (22), and
- curing the resin of the resin-impregnated fibre layer.

7. Method according to claim 6, **characterised in that** the step comprising inserting the screw bushing (16) is carried out simultaneously with a step comprising pressing or bonding the aquaplane (10).

8. Method according to either claim 6 or claim 7, **characterised in that** a plurality of screw bushings (16) are simultaneously inserted through the resin-impregnated fibre layer, in particular through the same fibre layer extending over a plurality of blind holes (16), into the plurality of blind holes (22).

9. Method according to any one of claims 6 to 8, **characterised in that** after inserting the at least one screw bushing (16), an upper cover layer (34) is applied to the top of the main body (20) which at least covers the upper opening of the at least one screw bushing (16).

10. Method according to claim 9, **characterised in that** the upper cover layer (34) extends over substantially the entire surface of the main body (20).

11. Method according to any one of claims 6 to 10, **characterised in that** it further comprises a step comprising pressing a binding plate (14) onto the top of the main body (20), a or the resin-impregnated fibre body being arranged between the binding plate (14) and the main body (20).

12. Method according to claim 11, **characterised in that** the step comprising pressing on the binding plate (14) is carried out simultaneously with the step comprising pressing the at least one screw bushing (16) into the associated blind hole (22).

## Revendications

1. Planche de glisse (10) comportant un corps principal (20) en forme de panneau, au moins un système de montage par liaison (12), qui est disposé dans une section médiane du corps principal (20) et qui est installé pour fixer une liaison, ainsi qu'une couche de recouvrement (34), qui est disposée au-dessus du corps principal (20) et est libre vers l'extérieur,
sachant que le corps principal (20) présente dans la section médiane au moins un trou borgne (22) qui s'ouvre en direction du côté supérieur du corps principal (20),
sachant que le système de montage par liaison (12) comporte au moins une douille filetée (16), qui est insérée dans le trou borgne (22) au moins au nombre de un du corps principal (20),
sachant qu'un matériau fibreux résineux (26) est disposé entre la douille filetée (16) et les parois et/ou le fond du trou borgne (22),
sachant que la couche de recouvrement (34) en tant que couche fermée recouvre complètement le corps principal (20) et le système de montage par liaison (12) au moins au nombre de un et obture l'ouverture supérieure de la douille filetée (16) au moins au nombre de une.

2. Planche de glisse (10) selon la revendication 1, **caractérisée en ce que** le système de montage par liaison (12) comporte en outre un panneau de liaison (14) fixé sur le corps principal (20), sachant qu'un ou le matériau fibreux résineux (26) est disposé entre le corps principal (20) et le panneau de liaison (14) et sachant que le panneau de liaison (14) présente au moins un trou (18), par lequel l'intérieur de la douille filetée (16) est accessible.

3. Produit intermédiaire de planche de glisse (10') comportant
- un corps principal (20) en forme de panneau, lequel présente dans une section médiane, au moins un trou borgne (22) qui s'ouvre en direction du côté supérieur du corps principal (20),
- au moins une couche fibreuse (26) imbibée de résine, laquelle est disposée sur le corps principal (20) et recouvre complètement le trou borgne (22) au moins au nombre de un de telle sorte que la couche fibreuse (26) imbibée de résine se trouve à la fois à proximité du trou borgne (22) sur le côté supérieur du corps principal (20) et s'étend au-delà du trou borgne (22), et
- au moins un système de montage par liaison (12), lequel comporte au moins une douille filetée (16) qui est configurée de telle manière qu'elle s'adapte dans le trou borgne (22) du corps principal (20) au moins au nombre de un.

4. Produit intermédiaire de planche de glisse (10') selon la revendication 3, **caractérisé en ce que** la couche fibreuse (26) imbibée de résine présente au-dessus de l'ouverture du trou borgne (22) au moins au nombre de une entaille (28) ou un affaiblissement de matériau.

5. Produit intermédiaire de planche de glisse (10') selon la revendication 3 ou la revendication 4, **caractérisé en ce que** la couche fibreuse (26) imbibée de résine s'étend au-delà d'au moins deux trous borgnes (22) et d'une zone superficielle (24) du corps principal (20), s'étendant entre les deux trous borgnes ou plus.

6. Procédé de fabrication dune planche de glisse (10), en particulier d'une planche de glisse (10) selon la revendication 1 ou la revendication 2, sachant que le procédé comporte les étapes suivantes consistant à :
- fabriquer un corps principal (20) en forme de panneau,
- réaliser au moins un trou borgne (22) dans une section médiane du corps principal (20), qui s'ouvre en direction du côté supérieur du corps principal,
- appliquer au moins une couche fibreuse imbibée de résine sur le côté supérieur du corps principal (20) de telle sorte que la couche fibreuse imbibée de résine recouvre complètement le trou borgne (22) au moins au nombre de un,
- insérer en glissant une douille filetée (16) dans la couche fibreuse imbibée de résine au-dessus du trou borgne (22) de telle sorte que la douille filetée (16) pénètre dans le trou borgne (22), sachant qu'une section de la couche fibreuse imbibée de résine est pressée dans une zone entre la douille filetée (16) et les parois et/ou le fond du trou borgne (22), ainsi qu'à
- durcir la résine de la couche fibreuse imbibée de résine.

7. Procédé selon la revendication 6, **caractérisé en ce que** l'étape consistant à insérer en glissant la douille filetée (16) est réalisée en même temps que l'étape consistant à comprimer ou coller la planche de glisse (10).

8. Procédé selon la revendication 6 ou 7, **caractérisé en ce qu'**une pluralité de douilles filetées (16) est insérée en même temps dans la pluralité de trous borgnes (22) à travers la couche fibreuse imbibée de résine, en particulier une seule et unique couche fibreuse s'étendant au-delà de plusieurs trous borgnes (16).

9. Procédé selon l'une quelconque des revendications 6 à 8, **caractérisé en ce qu'**après avoir inséré la douille filetée (16) au moins au nombre de une, une couche de recouvrement (34) supérieure est appliquée sur le côté supérieur du corps principal (20), laquelle recouvre complètement au moins l'ouverture supérieure de la douille filetée (16) au moins au nombre de une.

10. Procédé selon la revendication 9, **caractérisé en ce que** la couche de recouvrement (34) s'étend au-dessus de la surface totale notamment du corps principal (20).

11. Procédé selon l'une quelconque des revendications 6 à 10, **caractérisé en ce qu'**il comporte en outre une étape consistant à presser un panneau de liaison (14) contre le côté supérieur du corps principal (20), sachant qu'une ou la couche fibreuse imbibée de résine est disposée entre le panneau de liaison (14) et le corps principal (20).

12. Procédé selon la revendication 11, **caractérisé en ce que** l'étape consistant à presser le panneau de liaison (14) est réalisée en même temps que l'étape consistant à enfoncer la douille filetée (16) au moins au nombre de une dans le trou borgne (22) associé.
